# EUROPEAN PATENT APPLICATION

(11) **EP 2 590 092 A1**
(43) Date of publication of application: **08.05.2013**
(21) Application number: 12190781.0
(22) Date of filing: 31.10.2012
(51) Int. Cl.: G06F 17/30

(54) **Search query context**

(30) Priority: 04.11.2011 US 201113289903
(71) Applicant: Microsoft Corporation, Redmond, Washington 98052 (US)
(72) Inventor: Ackerman, Nathan, Redmond, WA Washington 98052 (US); Weare, Christopher, Redmond, WA Washington 98052 (US); Guerrero, Oscar, Redmond, WA Washington 98052 (US)
(74) Representative: Fischer, Michael

(57) **Abstract**

Search techniques are described. In one or more implementations, a search service receives a search query from a user. A query context is formed for the user based on a history of content consumption that is verified for the user. A plurality of search results are generated that reference different types of content that correspond to the search query, respectively. The plurality of search results are ordered for output in a user interface according to the different types of content based at least in part on the query context.

## Description

### BACKGROUND

To locate particular content, users may interact with a search engine which may provide a wide variety of search results that may describe a wide variety of content. However, traditional techniques that were utilized to provide search results may become limited when confronted with different types of search results as well as different types of content described by the search results.

For example, a traditional search result type included links to websites with brief textual descriptions. This search result type was typically provided in response to keywords in a search request. However, the functionality of these traditional techniques may be limited in relation to other types of search results, such as images, videos, and so on. Further, ranking of these search results may be even further complicated when different types of content are described in the search results, such as books, movies, music, and television shows that may be returned for a search of a name of an action hero.

### SUMMARY

Search techniques are described. In one or more implementations, a search service receives a search query from a user. A query context is formed for the user based on a history of content consumption that is verified for the user. A plurality of search results are generated that reference different types of content that correspond to the search query, respectively. The plurality of search results are ordered for output in a user interface according to the different types of content based at least in part on the query context.

In one or more implementations, a query context is maintained for a user account based on data that references verification of media consumption made by one or more devices associated with a user account. A user interface is configured in response to a search query for display to a user of the user account, the user interface including a plurality of search results found for the search query and that are ordered by respective media type based on the query context.

In one or more implementations, a search service implemented by one or more computing devices is configured to maintain a query context for a user account based on data that references verification of content consumption made by one or more devices associated with a user account and generate a plurality of search results that reference different types of content that correspond to the search query, respectively. The search service is also configured to order the plurality of search results for output in a user interface according to the different types of content based at least in part on the query context and one or more business goals and form a communication to cause a user interface to be output for display by a user associated with the user account including at least a portion of the ordered plurality of search results.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.

FIG. 1 is an illustration of an environment in an example implementation that is operable to employ search query context techniques.

FIG. 2 is an illustration of a system showing a client device of FIG. 1 configured as a game console that is capable of using a camera and microphone to verify user interaction with an output of content and gauge the user's attitude toward the output.

FIG. 3 depicts a system in an example implementation showing generation and use of a query context for a search query to generate a search result.

FIG. 4 is a flow diagram depicting a procedure in an example implementation in which a query context is formed and used to order a plurality of search results.

FIG. 5 is a flow diagram depicting a procedure in an example implementation in which a query context is maintained for a user account and used to configure a user interface in response to a search query.

FIG. 6 illustrates an example system that includes the client device as described with reference to FIG. 1.

FIG. 7 illustrates various components of an example device that can be implemented as any type of computing device as described with reference to FIGS. 1, 2, and 6 to implement embodiments of the techniques described herein.

### DETAILED DESCRIPTION

### Overview

Traditional techniques to perform a search may be limited when confronted with different types of content that are described for the search results. For example, a user may provide a search query that involves a name of a comic book character. Consequently, search results may be generated for this name may reference a variety of different types of content, such as a movie that includes the comic book character, songs from the movie involving the character, comic books themselves, games using the comic book character, and so forth. Traditional techniques that were utilized to order these search results, however, may have a difficult time in determining which of these types are likely to be relevant for the search query as this could change between users and even between queries offered at different times from the same user.

Search query context techniques are described. In one or more implementations, a query context may be used to order search results and thus increase a likelihood that search results that are relevant to a user are ordered "early" in relation to other results. The query context may be formed in a variety of ways. For example, the query context may be based on content consumption of a user. This may include content consumed using a game console (e.g., television, movies, music, games), a mobile communications device, a set-top box, a personal computer, and so on.

Further, the consumption of the content may be verified such that the query context has increased accuracy, such as based on an actual output of the content, verification that a user actually viewed the content (e.g., using a camera), reacted to the content (e.g., using a microphone), attitude of the user toward the content, and so on. In this way, the query context may have increased accuracy over conventional techniques that relied merely on whether a user had access to the content, e.g., purchased a movie. Additional considerations may also be used in the ordering of the content, such as to take into account one or more business goals. Further discussion of these and other techniques may be found in relation to the following sections.

In the following discussion, an example environment is first described that is operable to perform search techniques described herein. Examples procedures are then described, which are operable in the example environment as well as in other environments. Likewise, the example environment is not limited to performance of the example procedures.

### Example Environment

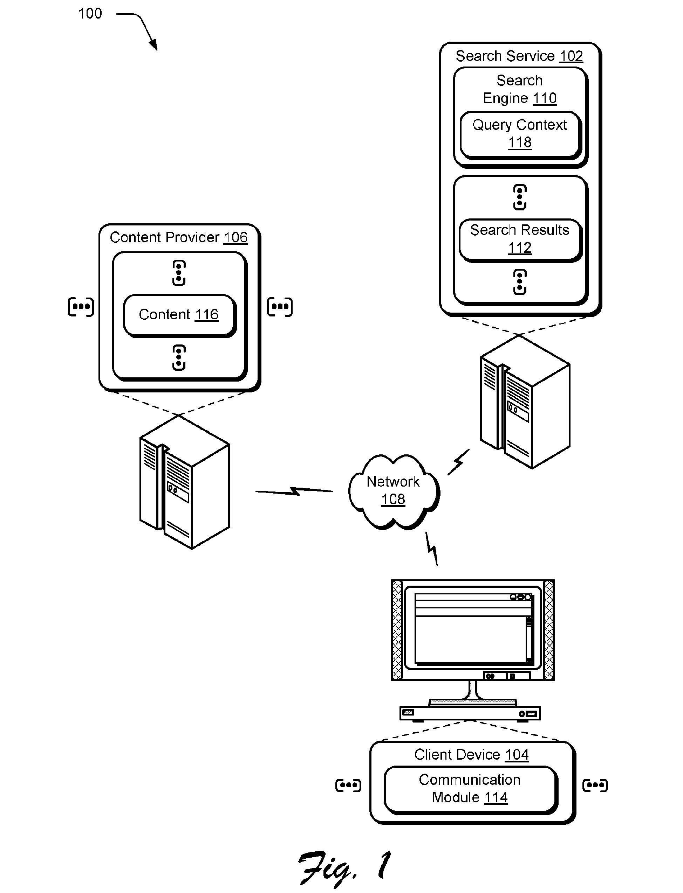

FIG. 1 is an illustration of an environment 100 in an example implementation that is operable to employ search techniques. The illustrated environment 100 includes a search service 102, a client device 104, and a content provider 106, each of which are communicatively coupled, one to another, over a network 108. Although the client device 104 is illustrated as being implemented by a conventional desktop computer and the search service 102 and content provider 106 are illustrated as being implemented by one or more servers, these entities may be implemented by a variety of different devices.

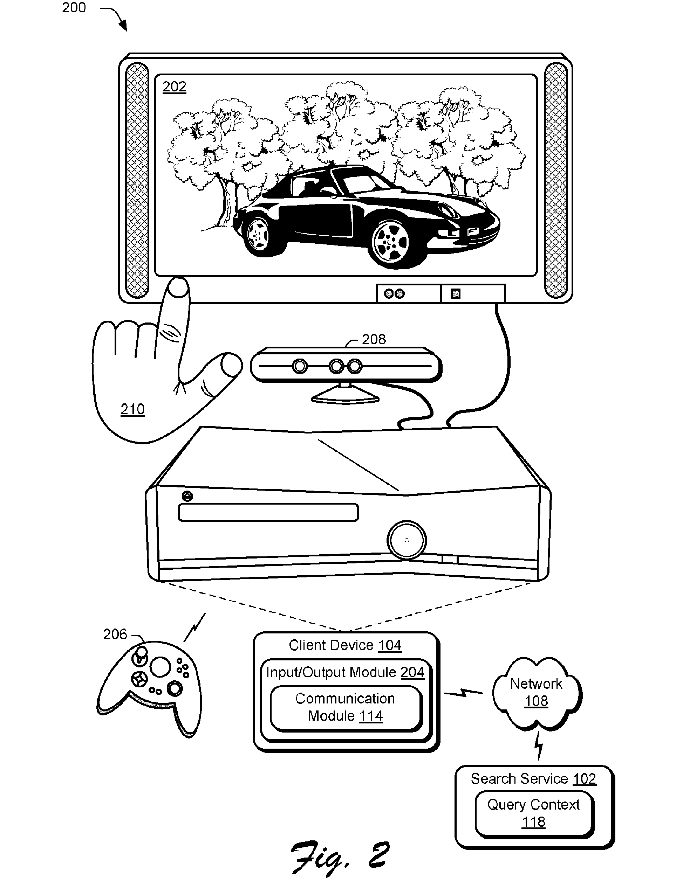

For example, the client device 104 may be configured as a computer that is capable of communicating over the network 108, such as a desktop computer, a mobile station, an entertainment appliance, a set-top box communicatively coupled to a display device, a wireless phone, a game console as illustrated in FIG. 2, a tablet computer, a netbook, and so forth. Thus, the client device 104 may range from a full resource device with substantial memory and processor resources (e.g., personal computers, game consoles) to a low-resource device with limited memory and/or processing resources (e.g., conventional set-top boxes, hand-held game consoles). Additionally, the devices may be representative of one or more devices, e.g., the search service 102 may be implemented as a network (e.g., web) service by a plurality of servers in a server farm. A variety of other examples are also contemplated.

Although the network 108 is illustrated as the Internet, the network may assume a wide variety of configurations. For example, the network 108 may include a wide area network (WAN), a local area network (LAN), a wireless network, a public telephone network, an intranet, and so on. Further, although a single network 108 is shown, the network 108 may be configured to include multiple networks.

The search service 102 is illustrated as including a search engine 110. The search engine 110 is representative of functionality to provide search results 112 in response to a search query, e.g., a search result page or other arrangement for output in a user interface of the client device 104. For example, a user of the client device 104 may interact with a communication module 114, which is representative of functionality of the client device 104 to interact with the network 108, such as a browser over the Internet. The communication module 114 may provide a query to the search service 102 (e.g., one or more keywords, images, spoken words, and so on) which causes the search engine 110 of the search service 102 to form search results 112 to be returned to the client device 104. The search engine 110 may employ a variety of different techniques to form the search results 112. For example, the search engine 110 may employ one or more software robots ("bots") to search and index content available over the Internet, such as content 116 from the content provider 106.

As previously described, the search results 112 may take a variety of different forms, such as references to webpages, images, shopping, maps, and so on. Additionally, the search results 112 may refer to a variety of different types of content 116, such as movies, video games, books, media, television programs, songs, and so forth. Consequently, even though different users may provide the same search query, these users may have different intents regarding the search, such as for a song, movie, game, and so on.

Accordingly, techniques are described herein in which the search engine 110 may employ a query context 118 to determine which types of content referenced in the search results 112 are likely to be of interest to a user that is to receive the search results 112, e.g., the client device 104. The query context 118 may be formed in a variety of ways in order to aid this determination. For example, the query context 118 may be formed to describe a context for aggregate community usage. The query context 118, for instance, may be based on monitored user interaction with the search results 112 in order to determine which types of content referenced in the search results 112 has a higher degree of interest to users that receive the results.

In another example, the query context 118 may be formed to take into account one or more business goals of the search service 102. The search service 102, for instance, may collect revenue in order to increase a ranking of a search result for particular queries or parts of queries, e.g., words. In another instance, the business goals may pertain to particular content available from the service itself, such as a new release of a game, video, movie, push older content for consumption, and so forth.

The query context 118 may also be configured to correspond to a particular user, such as a particular user account of the service. The query context 118, for instance, may be configured to describe user interaction with content. This may include what content 116 is purchased in association with the user account. Further, the user interaction described by the query context 118 may be verified.

The query context 118, for instance, may be configured based on data received from the communication module 114 of the client device 104. This data may describe which data was actually output by the client device 104. Thus, this verification may "take another step" over the interaction described above in that the query context 118 describes actual usage and not whether the user had access to the content 116. For example, a user may purchase a song but not play it. Therefore, a context based on purchase of the song by itself may be inaccurate. This usage may also describe varying degrees of usage, such as a number of times output.

In a further example, this verification may "take additional steps" and verify that a user is present during the output, determine a user's likely attitude during the output of the content, and so on. This may be performed in a variety of ways, such as through use of a camera (e.g., by a game console, mobile phone, webcam, and so on), microphone, touch surface, presence sensing device, and so on. Thus, a query context 118 based on such data obtained from the client device 104 may further describe observed user interaction during an output of content 116 as well as "how the user felt" during this output. Further discussion of an example configuration of the client device 104 to form such data may be found in relation to FIG. 2.

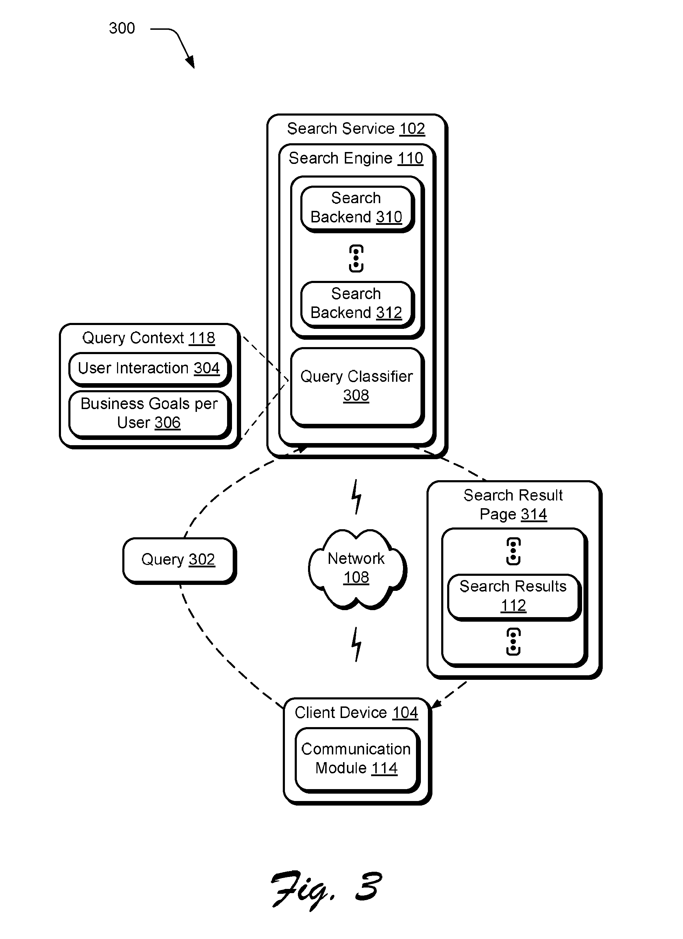

Thus, the query context 118 may function to give a context to a query to search results 112 formed in response to receipt of a search query from the client device 104. This context may then be used to rank the search results 112 to increase a likelihood that a user that corresponds to the query context 118 will be able to readily locate a search result 112 of interest, further discussion of which may be found in relation to FIG. 3.

Generally, any of the functions described herein can be implemented using software, firmware, hardware (e.g., fixed logic circuitry), or a combination of these implementations. The terms "module," "functionality," and "engine" as used herein generally represent software, firmware, hardware, or a combination thereof. In the case of a software implementation, the module, functionality, or engine represents program code that performs specified tasks when executed on a processor (e.g., CPU or CPUs) and is storable in one or more computer readable storage devices and thus is implementable at least partially in hardware. The features of the techniques described below are platform-independent, meaning that the techniques may be implemented on a variety of commercial computing platforms having a variety of processors.

For example, a computing device may also include an entity (e.g., software) that causes hardware of the computing device to perform operations, e.g., processors, functional blocks, and so on. For example, the computing device may include a computer-readable medium that may be configured to maintain instructions that cause the computing device, and more particularly hardware of the computing device to perform operations. Thus, the instructions function to configure the hardware to perform the operations and in this way result in transformation of the hardware to perform functions. The instructions may be provided by the computer-readable medium to the computing device through a variety of different configurations.

One such configuration of a computer-readable medium is signal bearing medium and thus is configured to transmit the instructions (e.g., as a carrier wave) to the hardware of the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may use magnetic, optical, and other techniques to store instructions and other data.

FIG. 2 is an illustration of a system 200 showing the client device 104 of FIG. 1 configured as a game console that is capable of using a camera and microphone to verify user interaction with an output of content and gauge the user's attitude toward the output. The illustrated system 200 includes the client device 104 configured as a game console that is connected to a display device 202, e.g., a television.

The client device 104 is illustrated as including an input/output module 204. The input/output module 204 is representative of functionality relating to recognition of inputs and/or provision of outputs by the client device 104. For example, the input/output module 204 may be configured to receive inputs from a keyboard, mouse, to identify gestures and cause operations to be performed that correspond to the gestures, and so on. Thus, detection of inputs during an output of content on the display device 202 may be used to verify that a user is present during the output. The inputs may be detected by the input/output module 204 in a variety of different ways.

The input/output module 204 may be configured to receive one or more inputs via touch interaction with a hardware device, such as a controller 206 as illustrated. Touch interaction may involve pressing a button, moving a joystick, movement across a track pad, use of a touch screen of the display device 104 (e.g., detection of a finger of a user's hand or a stylus), and so on. Recognition of the touch inputs may be leveraged by the input/output module 204 to interact with a user interface output by the client device 104, such as to interact with content 116 including a game, an application, browse the internet, change one or more settings of the client device 104, interact with another client device via the network 108 (e.g., a social network), and so forth. A variety of other hardware devices are also contemplated that involve touch interaction with the device. Examples of such hardware devices include a cursor control device (e.g., a mouse), a remote control (e.g. a television remote control), a mobile communication device (e.g., a wireless phone configured to control one or more operations of the client device 104), and other devices that involve touch on the part of a user or object. Thus, in this example the touch interaction may be used to indicate that a user is present during an output of the content 116.

The input/output module 204 may also be configured to provide a natural user interface (NUI) that may recognize interactions that may not involve touch. For example, the client device 104 may include a NUI input device 208. The NUI input device 208 may be configured in a variety of ways to detect inputs without having a user touch a particular device, such as to recognize audio inputs through use of a microphone.

For instance, the input/output module 204 may be configured to perform voice recognition to recognize particular utterances (e.g., a spoken command) as well as to recognize a particular user that provided the utterances. Thus, the microphone may be used to verify whether a user is present during an output of content and may even employ voice recognition to determine which user is present during this output. Further, voice processing may also be performed to determine a user's attitude regarding an output of the content, such as a user's mood (e.g., happy, agitated, ambivalent) based on a user's tone and/or words uttered by the user. Data describing this observed interaction may then be provided by the communication module 114 to the search service 102 via the network 108 to form the query context 118 that not only describes interaction but also characteristics of the interaction.

In another example, the NUI input device 208 may be configured to recognize gestures, presented objects, images, and so on through use of a camera. The camera, for instance, may be configured to include multiple lenses so that different perspectives may be captured and thus determine depth. The different perspectives, for instance, may be used to determine a relative distance from the NUI input device 208 and thus a change in the relative distance, e.g., such as to determine distances from a user's hand 210. The different perspectives may be leveraged by the client device 104 as depth perception.

The images may also be leveraged by the input/output module 204 to provide a variety of other functionality, such as techniques to identify particular users (e.g., through facial recognition), objects, facial expression, and so on. Thus, like the microphone example above a camera of the NUI input device 208 may be used to determine if a user is present, may determine which user is present, and may also be used to determine an attitude of the user toward content being output by the client device 104, e.g., through facial recognition of expressions made by the user. Thus, the output of the content may be verified and a user's opinion of that output may be verified for use in forming the query context 118.

Although this example system 300 involves a game console, the client device 104 may be configured in a variety of other ways that incorporate a microphone and/or a camera, e.g., a mobile communication device such as a wireless phone, tablet computer, a set-top box, and so on. Additional discussion of the formation and use of the query context 118 may be found in relation to the following figure.

FIG. 3 depicts a system 300 in an example implementation showing generation and use of a query context for a search query to generate a search result. In this example, a communication module 114 of the client device 104 is used to provide a query 302 to the search service 102, such as through configuration as a browser, dedicated search application, part of an operating system, and so on.

The search engine 110 of the search service 102 may then employ a query context 118 for the query 302. As previously described, the query context 118 may describe user interaction 304 such as interaction involving content 116 output by the client device 104, purchases performed at a network service (e.g., an online marketplace), interaction performed by the client device 104 via a social network service, and so on as previously described. The query context 118 may also incorporate business goals 306 that are particular to the user. For example, these business goals 306 may be based on the user interaction 304 described by the query context 118, such as with which types of content the user typically interacts, particular items of content, and so on.

The query context 118 may then be used to output a set of rules that may be employed by a query classifier 308 to develop an "understanding" of an intent behind the query 302, which may be applied to search results obtained from one or more of a plurality of search back ends 310, 312 of the search service 102. Each of the search back ends 310, 312, for instance, may correspond to searches performed for different types of content, such as games, music, videos, movies, television programs, and so on.

In one or more implementations, application of the rules to the results received from the search back ends 310, 312 may be normalized. For example, this normalization may be used to address differences in how search results from the various search back ends 310, 312 are ranked, e.g., to address differences between linear and geometric progressions.

Thus, the search engine 110 may use individual results from the various search back ends 310, 312 along with the query context 118 to blend the search results in a way that addresses a likely "intent" behind the query 302. Thus, the "intent" may be expressed as a function of observed individual and aggregate user behavior, business rules, offline processing of documents, and so on.

A variety of different algorithms may be employed by the query classifier 308 to arrive at an ordering of the search results 112, one to another, such as for display in a user interface as a search result page 314. For example, for a given query 302, a list of probabilities pertaining to the separate types of content may be determined. The query 302, for instance, may involve a search across applications, music albums, and television programs (e.g., from the various search back ends 310, 312). Accordingly, the query classifier 308 may utilize probabilities generated at least in part using the query context 118 that pertain for different types of content of the respective search back ends 310, 312, e.g., for different content types. Thus, the probability may be independent and address a particular type of content, although it should be apparent that the same probability may be applied to two or more different types of content. In other words, different types of content may have matching probabilities.

The query classifier 308, for instance, may calculate relative probabilities from the independent probabilities described above. For each type of content, this may be found found by taking that probability over the sum of each of the other probabilities. For each content type, the query classifier calculates the probability that the query was for that content type. The query classifier 308 may then select the content type with the greatest probability. These steps may then be repeated for the total number of content types to be ranked, which will then yield an ordered list of content types, e.g., music followed by television program, and so on. To generate the final order of the search results 112 that is returned to the client device 104, the query classifier 308 may take the top search result (i.e., "item") from each dedicated search back-end 310, 312 and add it to a queue. This may be done for each of the items in the content list. If a search backend does not have any more items for the specified content type, the query classifier 308 may process to the next item in the item list. It should be apparent that a variety of other algorithms may also be employed by the search service 102. Further discussion of search query context techniques may be found in relation to the following procedures.

### Example Procedures

The following discussion describes search query context techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to the environment 100 of FIG. 1 and the systems 200, 300 of FIGS. 2 and 3.

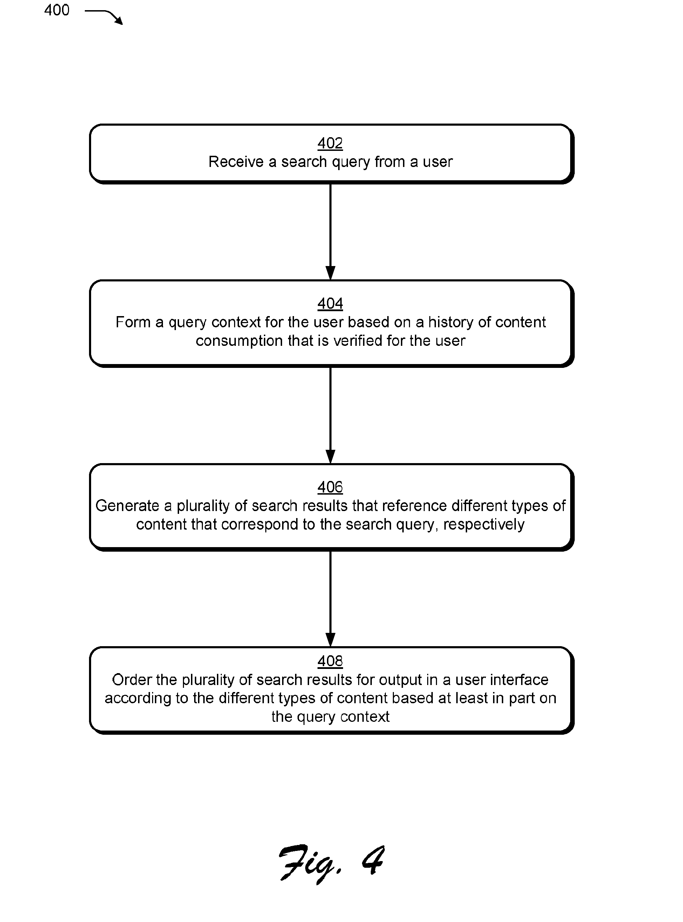

FIG. 4 depicts a procedure 400 in an example implementation in which a query context is formed and used to order a plurality of search results. A search service receives a search query from a user (block 402). The user, for example, may interact with a user interface output by the client device 104 that involves an online marketplace provided as part of a network service that includes the search service 102.

A query context is formed for the user based on a history of content consumption that is verified for the user (block 404). The query context, for instance, may be formed by the search service 102 based on monitored content consumption associated with a user account, with a particular user, with one or more particular devices, and so on.

A plurality of search results are generated that reference different types of content that correspond to the search query, respectively (block 406). The search engine 110, for instance, may employ a plurality of search back ends 310, 312 that pertain to different types of content supported by the online marketplace.

The plurality of search results are ordered for output in a user interface according to the different types of content based at least in part on the query context (block 408). The query context 118 that is associated with the client device 104 that provided the query 302, for instance, may indicate that the client device 104 is typically utilized to output games more so than movies. Accordingly, the query context 118 may be used to order the search results 112 in a search result page 314 such that search results that pertain to games as indicated by the query context 118 are given a higher priority than search results 112 that pertain to other types of content. A variety of other examples are also contemplated as described above.

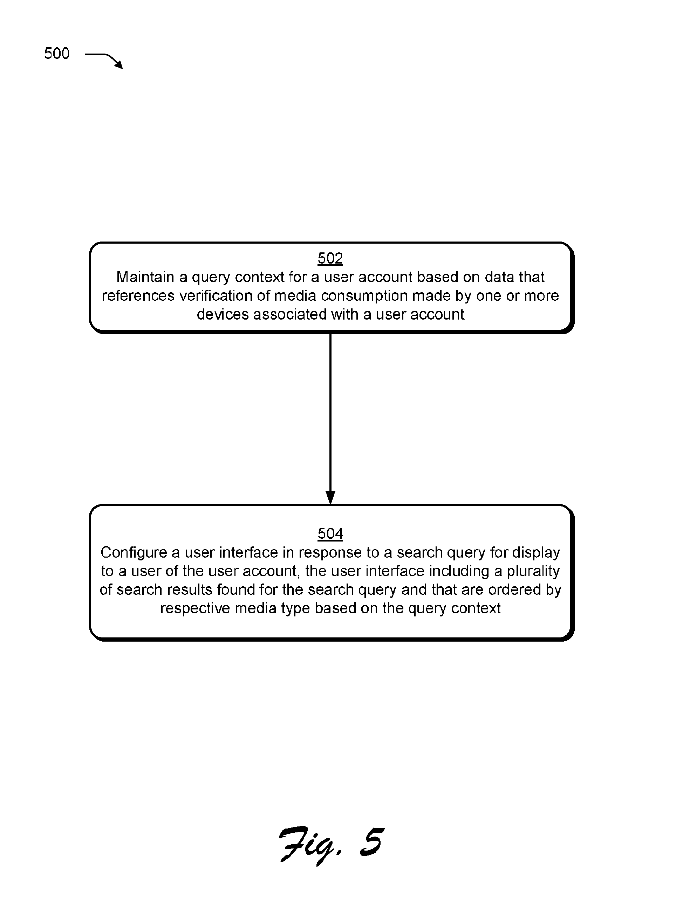

FIG. 5 depicts a procedure in an example implementation in which a query context is maintained for a user account and used to configure a user interface in response to a search query. A query context is maintained for a user account based on data that references verification of media consumption made by one or more devices associated with a user account (block 502). The search service 102, for instance, may generate and update a query context 118 based on monitored user interaction with content which may be verified as previously described.

A user interface is configured in response to a search query for display to a user of the user account, the user interface including a plurality of search results found for the search query and that are ordered by respective media type based on the query context (block 504). The search results 112, for instance, may be formed as a search result page 314 that is communicated to the client device 104 for output.

### Example System and Device

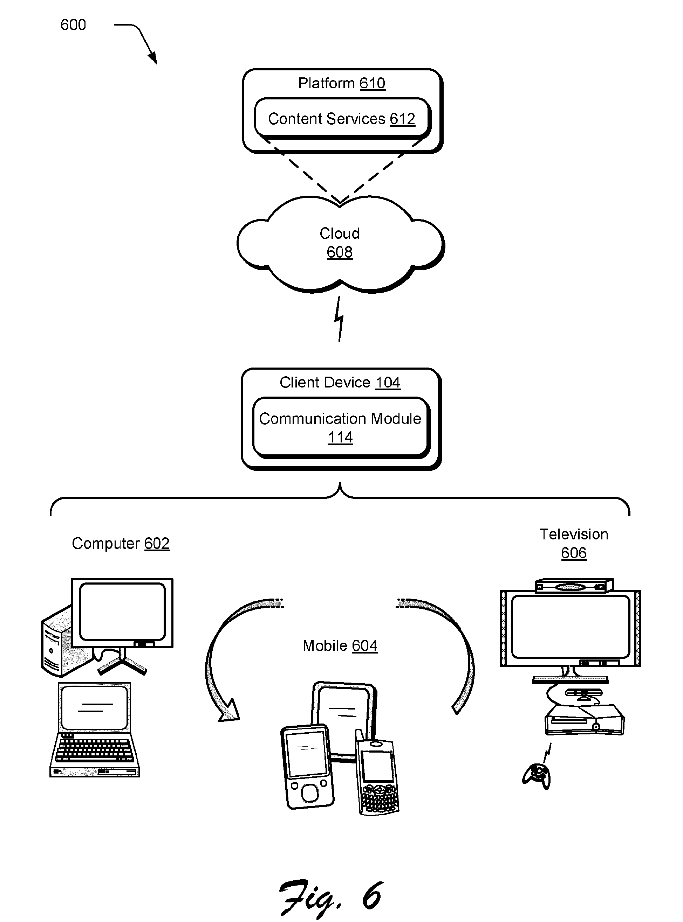

FIG. 6 illustrates an example system 600 that includes the client device 104 as described with reference to FIG. 1. The example system 600 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 600, multiple devices are interconnected through a central computing device. The central computing device may be local to the multiple devices or may be located remotely from the multiple devices. In one embodiment, the central computing device may be a cloud of one or more server computers that are connected to the multiple devices through a network, the Internet, or other data communication link. In one embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one embodiment, a class of target devices is created and experiences are tailored to the generic class of devices. A class of devices may be defined by physical features, types of usage, or other common characteristics of the devices.

In various implementations, the client device 104 may assume a variety of different configurations, such as for computer 602, mobile 604, and television 606 uses. Each of these configurations includes devices that may have generally different constructs and capabilities, and thus the client device 104 may be configured according to one or more of the different device classes. For instance, the client device 104 may be implemented as the computer 602 class of a device that includes a personal computer, desktop computer, a multi-screen computer, laptop computer, netbook, and so on.

The client device 104 may also be implemented as the mobile 604 class of device that includes mobile devices, such as a mobile phone, portable music player, portable gaming device, a tablet computer, a multi-screen computer, and so on. The client device 104 may also be implemented as the television 606 class of device that includes devices having or connected to generally larger screens in casual viewing environments. These devices include televisions, set-top boxes, gaming consoles, and so on. The techniques described herein may be supported by these various configurations of the client device 104 and are not limited to the specific examples the techniques described herein.

The cloud 608 includes and/or is representative of a platform 610 for content services 612, e.g., which may include support of an online marketplace, the search provider 102, and so on. The platform 610 abstracts underlying functionality of hardware (e.g., servers) and software resources of the cloud 608. The content services 612 may include applications and/or data that can be utilized while computer processing is executed on servers that are remote from the client device 104. Content services 612 can be provided as a service over the Internet and/or through a subscriber network, such as a cellular or Wi-Fi network.

The platform 610 may abstract resources and functions to connect the client device 104 with other computing devices. The platform 610 may also serve to abstract scaling of resources to provide a corresponding level of scale to encountered demand for the content services 612 that are implemented via the platform 610. Accordingly, in an interconnected device embodiment, implementation of functionality of the functionality described herein may be distributed throughout the system 600. For example, the functionality may be implemented in part on the client device 104 as well as via the platform 610 that abstracts the functionality of the cloud 608.

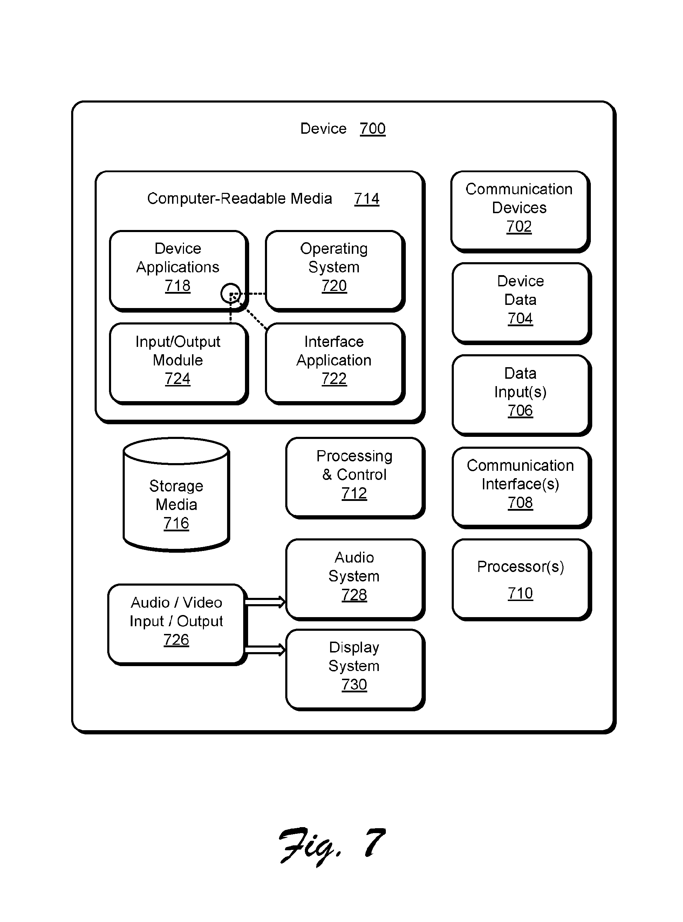

FIG. 7 illustrates various components of an example device 700 that can be implemented as any type of computing device as described with reference to FIGS. 1, 2, and 6 to implement embodiments of the techniques described herein. Device 700 includes communication devices 702 that enable wired and/or wireless communication of device data 704 (e.g., received data, data that is being received, data scheduled for broadcast, data packets of the data, etc.). The device data 704 or other device content can include configuration settings of the device, media content stored on the device, and/or information associated with a user of the device. Media content stored on device 700 can include any type of audio, video, and/or image data. Device 700 includes one or more data inputs 706 via which any type of data, media content, and/or inputs can be received, such as user-selectable inputs, messages, music, television media content, recorded video content, and any other type of audio, video, and/or image data received from any content and/or data source.

Device 700 also includes communication interfaces 708 that can be implemented as any one or more of a serial and/or parallel interface, a wireless interface, any type of network interface, a modem, and as any other type of communication interface. The communication interfaces 708 provide a connection and/or communication links between device 700 and a communication network by which other electronic, computing, and communication devices communicate data with device 700.

Device 700 includes one or more processors 710 (e.g., any of microprocessors, controllers, and the like) which process various computer-executable instructions to control the operation of device 700 and to implement embodiments of the techniques described herein. Alternatively or in addition, device 700 can be implemented with any one or combination of hardware, firmware, or fixed logic circuitry that is implemented in connection with processing and control circuits which are generally identified at 712. Although not shown, device 700 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

Device 700 also includes computer-readable media 714, such as one or more memory components, examples of which include random access memory (RAM), non-volatile memory (e.g., any one or more of a read-only memory (ROM), flash memory, EPROM, EEPROM, etc.), and a disk storage device. A disk storage device may be implemented as any type of magnetic or optical storage device, such as a hard disk drive, a recordable and/or rewriteable compact disc (CD), any type of a digital versatile disc (DVD), and the like. Device 700 can also include a mass storage media device 716.

Computer-readable media 714 provides data storage mechanisms to store the device data 704, as well as various device applications 718 and any other types of information and/or data related to operational aspects of device 700. For example, an operating system 720 can be maintained as a computer application with the computer-readable media 714 and executed on processors 710. The device applications 718 can include a device manager (e.g., a control application, software application, signal processing and control module, code that is native to a particular device, a hardware abstraction layer for a particular device, etc.). The device applications 718 also include any system components or modules to implement embodiments of the techniques described herein. In this example, the device applications 718 include an interface application 722 and an input/output module 724 that are shown as software modules and/or computer applications. The input/output module 724 is representative of software that is used to provide an interface with a device configured to capture inputs, such as a touchscreen, track pad, camera, microphone, and so on. Alternatively or in addition, the interface application 722 and the input/output module 724 can be implemented as hardware, software, firmware, or any combination thereof. Additionally, the input/output module 724 may be configured to support multiple input devices, such as separate devices to capture visual and audio inputs, respectively.

Device 700 also includes an audio and/or video input-output system 726 that provides audio data to an audio system 728 and/or provides video data to a display system 730. The audio system 728 and/or the display system 730 can include any devices that process, display, and/or otherwise render audio, video, and image data. Video signals and audio signals can be communicated from device 700 to an audio device and/or to a display device via an RF (radio frequency) link, S-video link, composite video link, component video link, DVI (digital video interface), analog audio connection, or other similar communication link. In an embodiment, the audio system 728 and/or the display system 730 are implemented as external components to device 700. Alternatively, the audio system 728 and/or the display system 730 are implemented as integrated components of example device 700.

### Conclusion

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method implemented by one or more computing devices of a search service, the method comprising:
receiving a search query from a user (402);
forming a query context for the user based on a history of content consumption that is verified for the user (404);
generating a plurality of search results that reference different types of content that correspond to the search query, respectively (406); and
ordering the plurality of search results for output in a user interface according to the different types of content based at least in part on the query context (408).

2. A method as described in claim 1, wherein the content consumption is verified for the user through verification that at least a portion of the content has been output for consumption by the user.

3. A method as described in claim 1, wherein the content consumption is verified for the user through verification that the user has interacted with at least a portion of an output of the content.

4. A method as described in claim 1, wherein the content consumption further describes interaction of the user with a marketplace exposed by a network service.

5. A method as described in claim 1, wherein the content consumption is verified for the user through use of a camera.

6. A method as described in claim 5, wherein images captured by the camera are used to verify that the user has watched at least a portion of an output of the content.

7. A method as described in claim 1, wherein the forming further comprises ascertaining a likely attitude of the user in relation to an output of at least a portion of the consumed content.

8. A method as described in claim 7, wherein the likely attitude of the user is determined at least in part based on data captured using a microphone or a camera.

9. A method as described in claim 7, wherein the data captured by the camera is used to ascertain the likely attitude of the user through recognition of one or more expressions made by the user during the output of the portion of the consumed content.

10. A method as described in claim 1, wherein the query context is formed for content consumption associated with a user account of the user.
